(19) Europäisches Patentamt
European Patent Office
Office européen des brevets

(11) Publication number: **0 131 191**
**B1**

(12) **EUROPEAN PATENT SPECIFICATION**

(45) Date of publication of patent specification: **26.11.86**

(51) Int. Cl.[4]: **C 08 K 5/18,** C 08 K 3/34,
C 08 L 21/00

(21) Application number: **84107272.1**

(22) Date of filing: **25.06.84**

(54) **Organoclay-antiozonant complex.**

(30) Priority: **07.07.83 US 511707**

(43) Date of publication of application:
**16.01.85 Bulletin 85/03**

(45) Publication of the grant of the patent:
**26.11.86 Bulletin 86/48**

(84) Designated Contracting States:
**DE GB**

(56) References cited:

**A. WHELAN et al.: "Developments in rubber technology-1", 1979, pages 232-236, Applied Science Publishers Ltd., London, GB;**

(73) Proprietor: **GEORGIA KAOLIN COMPANY, INC.**
**2700 U.S. Highway 22 East**
**Union New Jersey 07083 (US)**

(72) Inventor: **Thompson III, Thomas Dick**
**River Road Route 32**
**Upper Black Eddy Pennsylvania 18972 (US)**

(74) Representative: **Gross, Gernot K.**
**Kleiberweg 5**
**D-6200 Wiesbaden (DE)**

EP 0 131 191 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Background of the Invention

The present invention relates generally to antiozonants for adding to rubber formulations to inhibit or prevent the ozone cracking of the final rubber product. More specifically, the present invention relates to an organoclay-antiozonant complex, a method of preparing the organoclay-antiozonant complex, and a method of incorporating the organoclay-antiozonant complex into a natural or synthetic rubber formualtion.

It is well recognized that both synthetic and natural rubbers undergo deterioration due to ozone, an energized triatomic molecular form of oxygen commonly found in the atmosphere. The deterioration of rubber on exposure to the atmosphere due to traces of ozone present in the atmosphere is different from any deterioration caused by oxidation due to oxygen found in the atmosphere and is generally not inhibited by the same compounds which may inhibit oxygen deterioration of the rubber. Ozone reacts with the rubber and causes cracking particularly in places where the rubber is under tension. It is believed that ozone attacks the double bond in diene compounds in the rubber to form a molozonide which is very unstable and subsequently splits apart to form a zwitterion and a ketone resulting in the cleavage of the polymer backbone of the rubber and the formation of cracks therein. Subsequent deterioration of the zwitterions can cause further cleavage of the polymer backbone of the rubber and acclerate crack propagation therein.

It is well known in the art to incorporate in rubber formulations certain additives, termed antiozonants, which inhibit and retard such ozone cracking. It is common to add such ozonants to rubber formulations used in producing tires and other industrial rubber products. Although certain petroleum waxes which bloom to the surface of the rubber compound have been moderately effective as antiozonants, such waxes cannot provide adequate surface protection in instances where the rubber is under tension due to bending or flexing. Accordingly, it has become customary in the production of rubber to add antiozonant chemicals directly to the rubber formulation. By far, the most common ozonants for adding directly to the rubber formulation are aromatic amines such as substituted paraphenylenediamines. The various substituted paraphenylenediamines suitable for as antiozonants is vast. Examples of particular substituted paraphenylenediamines suitable as antiozonants in rubber formualtions are given in U.S. Patents 3,645,966; 3,663,505; 3,773,717; and 3,778,286.

Substituted paraphenylenediamines can be represented by the following general formula:

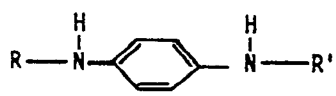

There are three sub-categories of substituted paraphenylenediamines under this general formulation. If R and R′ are both aryl compounds, then the substituted paraphenylenediamine is a diaryl-paraphenylenediamine. If both R and R′ are both akyl hydrocabons, then the substituted paraphenylenediamine is a dialkyl-paraphenylenediamine. If R is a akyl hydrocarbon and R′ a aryl hydrocarbon, or vice versa, then the substituted paraphenylenediamine is a alkyl-aryl-paraphenylenediamine.

A drawback of these antiozonant compounds is that they tend to be somewhat unstable in that they may react with other compounds added to the rubber formulation such as fillers, accelerators, softeners, extenders and waxes. Additionally, such antiozonant compounds are volatile and even soluble in water, both properties which lessen their effectiveness as antiozonants. Improved chemical stability within the rubber formulation, reduced volatility, and lower solubility in water would all enhance the effectiveness of antiozonant compounds.

Summary of the Invention

In accordance with the present invention, there is provided an organoclay-antiozonant complex suitable for incorporating in rubber formulations as a additive to inhibit and retard ozone attack. The organoclay-antiozonant is formed by complexing a substituted paraphenylenediamine antiozonant with an organoclay having been produced by treating a smectite-containing clay with a quaternary amine. It has been found that a synergistic effect is obtained when using the organoclay-antiozonant complex as an ozone inhibitor in rubber formulations. By forming the organoclay-antiozonant complex, more of the antiozonant is absorbed into the inner layer surfaces of the organoclay thereby providing that the antiozonant is more stable, less volatile and less soluble in water when introduced into the rubber formulation.

The antiozonant is selected from the group consisting of diaryl-paraphenylenediamines, dialkyl-paraphenylenediamines, aryl-alkyl-paraphenylenediamines, or mixtures thereof. In one preferred embodiment, the antiozonant comprises a six carbon alkyl-phenyl paraphenylenediamine.

Further in accordance with the present invention, the organoclay-antiozonant complex is prepared by reacting a smectite-containing clay with a quaternary amine and a substituted paraphenylenediamene antiozonant. In one embodiment of the method of preparing the organoclay-antiozonant complex, an unfractionated smectite-containing bentonite clay is blended with water to form a high solids content paste which is then mixed with a quaternary amine-antiozonant-polar solvent mixture to form the organoclay-antiozonant complex. In a further embodiment of the method of preparing the organoclay-antiozonant complex, a low solid aqueous dispersion of smectite-containing clay is prepared and then mixed with a mixture consisting of a quaternary amine and a substituted paraphenylene antiozonant. Preferably, the low solids aqueous clay dispersion is fractionated into a predominantly smectite-containing fraction and a predominantly non-smectite-containing fraction. The non-smectite-containing fraction is removed and the predominantly smectite-containing fraction mixed with the quaternary amine and antiozonent mixture to form the organoclay-antiozonant complex of the present invention.

Further in accordance with the present invention, there is provided a method of incorporating an antiozonant into a natural and synthetic rubber formulation comprising preparing an organoclay-antiozonant complex, mixing the organoclay-antiozonant complex with a naphtlenic oil and a polar solvent to form a paste, and adding the organoclay-antiozonant-oil paste to the rubber formulation.

Description of the Preferred Embodiment

A better understanding of the practice and the effectiveness of the present invention may be gained from the discussion presented hereinafter with reference to the following examples. These examples are regarded as illustrative, but not in any way limiting, of the present invention:

Example 1

A 6% solids aqueous dispersion of bentonite mined in the Kaycee area of Johnson County, Wyoming, was prepared by blunging crude bentonite in water with 0.2% tetra sodium pyrophosphate as a dispersing agent. This low solids aqueous dispersion was then fractionated by centrifugation to separate the dispersion into a substantially smectite portion and a substantially non-smectite portion. The substantially smectite portion of the fractionated aqueous bentonite dispersion was then spray dried to yield a smectite powder, while the non-smectite portion thereof was discarded. A 60% solids smectite paste was then formed by adding 120 grams of water to 175 grams of the dried smectite powder. This high solids smectite paste was then treated by slowly adding thereto while stirring a mixture consisting of 69.0 grams of Bioquat 816-a quaternary amine (75% active dimethyl benzyl hydrogenated tallow ammonium chloride and 25% isopropanol) produced by Biodabs, Inc., 175 grams of Wingstay 100 — an antiozonant (a blend of aryl paraphenylenediamines) produced by the Goodyear Chemical Division, and 175 grams of acetone. After a reaction period of approximately 1 hour, the resultant organoclay-antiozonant complex was dried and pulverized.

Example 2

A 6% solids aqueous dispersion of bentonite mined in the Kaycee area of Johnson County, Wyoming, was prepared by blunging crude bentonite in water with 0.2% tetra sodium pyrophosphate as dispersing agent. This low solids aqueous dispersion was then fractionated by centrifugation to separate the dispersion into a substantially smectite portion and a substantially non-smectite portion. The substantially non-smectite portion was discarded. The smectite portion of the low solids aqueous dispersion was then treated by slowly adding to 2917 grams of the low solids smectite dispersion (equivalent to 175 grams of dry smectite) while stirring a mixture consisting of 69.0 grams of quaternary amine (Bioquat 816), 175 grams of antiozonant (Wingstay 100) and 175 grams of acetone. After a reaction period of approximately 1 hour, the treated dispersion was filtered and the resultant filtercake of organoclay-antiozonant complex was dried and pulverized.

Example 3

A 60% solids paste of bentonite mined in the Kaycee area of Johnson County, Wyoming, was prepared by adding 175 grams of dry bentonite to 120 grams of water while mixing on a Hobart mixer. This high solids paste was then treated by adding thereto while stirring a mixture consisting of 69.0 grams of quaternary amine (Bioquat 816), 175 grams of antiozonant (Wingstay 100), and 175 grams of acetone. After a reaction period of approximately 1 hour, the resultant organoclay-antiozonant complex was dried and pulverized.

Example 4

The procedure described in Example 2 was followed except that 175 grams of Wingstay 200 — an antiozonant (a blend of aryl paraphenylenediamines) produced by the Goodyear Chemical Division was used rather than Wingstay 100. Also, the 175 grams of acetone was omitted.

Example 5

The procedure described in Example 2 was followed except that 175 grams of Wingstay 300 — an antiozonant (an alkyl-aryl paraphenylenediamine) produced by the Goodyear Chemical Division was used rather than Wingstay 100. Also, the 175 grams of acetone was omitted.

Example 6

A 60% solids paste of bentonite mined in the Kaycee area of Johnson County, Wyoming, was prepared by adding 175 grams of dry bentonite to 120 grams of water while mixing on a Hobart mixer. This high solids paste was then treated by adding thereto while stirring a mixture consisting of an antiozonant (Wingstay 100), and 175 grams of acetone. After a reaction period of approximately 1 hour, the resultant organoclay-antiozonant complex was dried and pulverized.

Example 7

The procedure described in Example 6 was followed except that 175 grams of Wingstay 200 — an antiozonant (a blend of aryl paraphenylenediamines) produced by the Goodyear Chemical Division was used rather than Wingstay 100. Also, the 175 grams of acetone was omitted.

Example 8

The procedure described in Example 6 was followed except that 175 grams of Wingstay 300 — an antiozonant (an alkyl-aryl paraphenylenediamine) produced by the Goodyear Chemical Division was used rather than Wingstay 100. Also, the 175 grams of acetone was omitted.

Example 9

A 6% solids aqueous dispersion of bentonite mined in the Kaycee area of Johnson County, Wyoming, was prepared by blunging crude bentonite in water with 0.2% tetra soidum pyrophosphate as a dispersing agent. This low solids aqueous dispersion of crude bentonite was then treated, without fractionation, by slowing adding to 2,917 grams of the dispersion, while stirring, a mixture consisting of 69.0 grams of quaternary amine (Bioquat 816), 175 grams of antiozonant comprising diaryl paraphenylenediamines (Wingstay 200). After a reaction period of approximately 1 hour, the treated dispersion was filtered and the resultant filtercake of organoclay-antiozonant complex was dried and pulverized.

Example 10

An organoclay-antiozonant-naphtlenic oil paste additive was prepared by dispersing 20 grams of the dry, pulverized organoclay-antiozonant of Example 3 in 45 grams of Circosol 4240, a naphtlenic oil produced by Sun Refining & Marketing Company. After a twenty minute mixing period, 5 grams of acetone was added and mixing continued for an additional five minutes.

It should be noted that in each example, the smectite-containing clay was treated with a quaternary amine at a treatment level of 60 milliequivalents per 100 grams of clay. Also, in each example, the antiozonant was complexed with the clay at a ratio of 1 gram of antiozonant per 1 gram of clay.

In order to determine the effectiveness of each of the organoclay-antiozonants presented in the examples, and also to determine the optimum procedures for producing an organoclay-antiozonant and incorporating it into a rubber formulation, each of the organoclay-antiozonant complexes prepared in the examples was used as an additive to the following rubber formulation:

| Ingredient | Parts by Weight |
|---|---|
| SBR 1502 (styrene-butadiene copolymer) | 100 |
| Fine particles size kaolin | 100 |
| Organoclay-antiozonant | see example |
| Antioxidant | 1 |
| Zinc oxide | 5 |
| Stearic acid | 2 |
| Sulfur | 3 |
| MBT (mercaptobenezothiazole) | 1.25 |
| DOTG (di-ortho-tolylguanidine) | 0.5 |

The organoclay-antiozonants of Examples 1 through 9 were added to the rubber formulation at a concentration of 4 parts by weight per 100 parts by weight of rubber formulation. The organoclay-antiozonant-oil paste of Example 10 was added at a concentration of 14 parts by weight per 100 parts by weight of rubber formulation which was equivalent to adding 4 parts per 100 rubber of the organoclay-antiozonant. Each of the rubber formulations to which the organoclay-antiozonants of the examples were added was cured in accordance with standard procedures to produce a rubber product. Each of the rubber products was then tested in accordance with the procedures outlined in ASTM test D-518A and D-1149 to determine the effectiveness of each of the organoclay-antiozonant by exposing the rubber products to ozone and observing the cracking of the rubber products under ozone exposure. The tests were conducted at a temperature of 40°C with the rubber product under 10% elongation and exposed to an ozone concentration of 50 parts per hundred million. The rubber products were observed for both the formation of No. 1 and No. 3 Cracks. A No. 1 Crack is defined as a crack visible only under a magnification of seven times, while a No. 3 Crack is defined as a crack visible to the unaided eye. Additionally, observations were

made for the rubber product with and without having been previously soaked in oil. The oil-soaked rubber products were each soaked in oil at 50°C for 7 days with each sample being wiped once daily. After seven days, the oil-soaked rubber products were rinsed with heptane in order to remove excess oil prior to being exposed to the ozone.

The results of these observations are set forth in Table I wherein the time to cracking is indicated in hours for both the formation of No. 1 and No. 3 Cracks for the rubber products formed from rubber formulations incorporating the organoclay-antiozonants presented in the Examples 1 through 10.

TABLE I

| Rubber Formulation Incorporating the Organoclay-Antiozonant of | No. 1 Crack | No. 3 Crack | No. 1* Crack | No. 3* Crack |
|---|---|---|---|---|
| Example 1 | — | — | 5 | 12 |
| Example 2 | 2 | 5 | 11 | 15 |
| Example 3 | 2 | 3 | 4 | 10 |
| Example 4 | 6 | 10 | 9 | 13 |
| Example 5 | 7 | 10 | 10 | 14 |
| Example 6 | 2 | 4 | 7 | 11 |
| Example 7 | 1 | 2 | 9 | 10 |
| Example 8 | 7 | 9 | 8 | 13 |
| Example 9 | — | — | 9 | 10 |
| Example 10 | 7 | 10 | 11 | 15 |
| Control 1 | 2 | 8 | 9 | 10 |
| Control 2 | 5 | 6 | 10 | 14 |

* rubber formulation soaked in oil for 7 days hours prior to ozone exposure.

Control Sample 1 and Control Sample 2 presented in Table I represent rubber formulations wherein an antiozonant was added to the rubber formulation but not complexed with an organoclay prior to addition to the rubber formulation. In Control Sample 1, the antiozonant Wingstay 100 was added to the rubber formulation at a concentration of two parts by weight per 100 parts by weight of rubber. In Control Sample 2, the antiozonant Wingstay 100 was added to the rubber formulation at a concentration of 2 parts by weight per 100 parts by weight of rubber and also the naphtletic oil Circosol 4240 was added to the rubber formulation at a concentration of 9 parts by weight per 100 parts by weight of rubber.

Additionally, in order to determine if any one of the paraphenylenediamine antiozonants which were to be complexed with organoclays in accordance with the present invention was per se a better antiozonant than the others, the three different paraphenylenediamines used in the present study, that is, Wingstay 100, Wingstay 200, and Wingstay 300, were each added to the aformentioned rubber formulation at a concentration of 2 parts by weight per 100 parts by weight of rubber formulation:

After curing, each of the rubber products was tested for resistance to cracking under ozone exposure. It was found that each of the antiozonants, Wingstay 100, Wingstay 200, and Wingstay 300, were equivalent with regard to inhibiting ozone deterioration in the rubber product. That is, the substituted paraphenylenediamines themselves were equivalent in their effectiveness as antiozonants whether they were diarylparaphenylenediamines such as Wingstay 100 and Wingstay 200 or alkyl-aryl paraphenylenediamines such as Wingstay 300. This point is further illustrated by comparing the times to form No. 1 and No. 3 Cracks for the rubber formulations formulates using the organoclay-antiozonant complexes of Examples 2, 4 and 5 wherein the organoclay-antiozonant complexes were formed in the same manner by treating a low solids smectite dispersion with a quaternary amine and an antiozonant mixture. Although the antiozonant was varied with Example 2 utilizing Wingstay 100, Example 4-Wingstay 200, and Example 5-Wingstay 300, the resultant rubber formulations had approximately the same resistance to oxone deterioration.

It was found that the method of forming the organoclay into which the antiozonant is complexed affected the performance of the organoclay-antiozonant complex in inhibiting ozone deterioration in rubber formulations. Preferably, the organoclay utilized to form an organoclay-antiozonant complex in accordance with the present invention is formed by first fractionating the crude bentonite clay into a substantially smectite containing portion and a substantially non-smectite portion, discarding the non-smectite portion and treating only the smectite containing portion with the quaternary amine to form the organoclay. This point is illustrated by comparing Example 1 to Example 3 and also by comparing Example 4 to Example 9. In Example 1, the organoclay was formed by treating a 60% solids state of substantially pure smectite with the quaternary amine while in Example 3 a 60% solids paste of the whole crude was treated with the quaternary amine. As shown in Table I, the organoclay-antiozonant complex of Example 1 performed better than the organoclay-antiozonant complex of Example 3 and also better than Control Sample 1. In Example 4, the organoclay was formed by treating a 6% solids dispersion of substantially pure smectite with a quaternary amine while the organoclay of Example 9 was formed by treating a 6% solids dispersion of the whole crude. As seen in Table I, the organoclay-antiozonant complex of Example 4 performed substanitally better than the organoclay-antiozonant complex of Example 9 and also of Control Sample 1.

Further, it is preferred in the present invention to form the organoclay into which the antiozonant is to be complexed by treating a low solids smectite dispersion with the quaternary amine rather than a high solids paste of the smectite. In Example 1, the organoclay with which the antiozonant is complexed was formed by treating a 60% solids smectite paste with a mixture containing the quaternary amine and the antiozonant Wingstay 100. In Example 2, a 6% solids aqueous smectite dispersion was treated with a mixture of a quaternary amine and the antiozonant Wingstay 100. As seen in Table II, the organoclay-antiozonant formed in accordance with Example 2 from a low solids smectite dispersion performed significantly better than the organoclay-antiozonant complex of Example 1 formed from a high solids smectite paste in the inhibiting of ozone deterioration. In both cases, it took longer for a No. 3 Crack to form in a rubber product soaked in oil that it did for the rubber product of Control Sample 1 wherein the antiozonant Wingstay 100 was uncomplexed when added to the rubber formulation.

In accordance with the present invention, the antiozonant compounds must be complexed with an organoclay and preferably an organoclay formed from treating a low solids aqueous dispersion of substantially pure smectite. Examples 2, 4 and 5 were all formed by treating a 6% solids substantially pure smectite dispersion with a mixture containing a quaternary amine and a substituted paraphenylenediamine antiozonant. The clay-antiozonant compositions of Examples 6, 7 and 8 were not prepared by complexing the antiozonant with the organoclay or even by forming an organoclay. Rather, the clay-antiozonant composition of Example 6, 7 and 8 were formed by merely mixing a substituted paraphenylenediamine antiozonant with a high solids paste of substantially whole crude smectite containing clay. As illustrated in Table I, the organoclay-antiozonant complexes of Examples 2, 4 and 5 performed significantly better in inhibiting ozone deterioration of the rubber products to which they were added than did the clay-antiozonant composition of Examples 6, 7 and 8. Therefore, in accordance with the present invention, it is required that the antiozonant be complexed with an organoclay prior to addition to the rubber formulation and not merely just mixed with a clay. It is believed that by forming an organoclay, the smectite becomes expanded and therefore more of the antiozonant may be absorbed into the inner layer, thereby explaining the synergistic effect of the clay and antiozonant when the antiozonant is complexed into an organoclay formed from the clay rather than being merely mixed with the clay prior to addition to the rubber formulation.

Further, it has been found that the method of incorporating the organoclay-antiozonant into the naturally synthetic rubber formulation can also affect the performance of the organoclay-antiozonant in inhibiting ozone deterioration of the rubber product. In Example 10, the organoclay-antiozonant of Example 3 was first mixed with Circosol 4240, a naphtlenic oil, and a polar solvent prior to addition to the rubber formulation to form a organoclay-antiozonant-naphtlenic oil paste. Upon the addition of this paste to the rubber formulation, it was found, as illustrated in Table I, tht the organoclay-antiozonant-oil paste of Example 10 performed significantly better than the organoclay-antiozonant of Example 3 which was used to form the paste of Example 10. Additionally, the organoclay-antiozonant-oil paste of Example 10 performed significantly better than the antiozonant-oil additive of Control Sample 2 in inhibiting ozone deterioration. It is believed that in addition to forming a protective film, the naphtlenic oil improves dispersions of the organoclay-antiozonant into the rubber formulation.

Therefore, a preferred embodiment of the method of incorporating an antiozonant into a natural or synthetic rubber formation in accordance with the present invention comprises preparing an organoclay-antiozonant complex, mixing the organoclay-antiozonant complex with a naphtlenic oil and a polar solvent to form a paste, and adding the organoclay-antiozonant-oil paste to the rubber formulation.

For example, the methods for forming the organoclay with which the antiozonant is to be complexed as presented herein may be modified to use other well-known quaternary amines rather than dimethyl benzyl hydrogenated tallow ammonium chloride as presented herein and also to treat the clay with the amine at other treatment levels rather than the 60 milliequivalents per 100 grams of clay as disclosed herein.

Although the effectiveness of the resultant organoclay-antiozonant complex in inhibiting ozone

deterioration in the rubber product may be affected by the particular method of forming the organoclay, it is believed that any organoclay formed by treating a smectite containing clay with a quaternary amine will perform synergistically when complexed with an antiozonant to enhance the antiozonant's ability to inhibit or retard ozone deterioration of the rubber product produced from any natural or synthetic rubber formulation to which the organoclay-antiozonant complex is added.

**Claims**

1. An organoclay-antiozonant complex comprising:

a. an antiozonant selected from the group consisting of diaryl-paraphenylenediamines, dialkyl paraphenylenediamines, alkyl-aryl paraphenylenediamines, or mixtures thereof; and

b. an organoclay having been produced by treating a smectite-containing clay with a quaternary amine.

2. An organoclay-antiozonant complex as recited in Claim 1 wherein the antiozonant comprises an alkyl-aryl paraphenylenediamine.

3. An organoclay-antiozonant complex as recited in Claim 1 wherein the antiozonant comprises a six carbon alkyl-phenyl paraphenylenediamine.

4. An organoclay-antiozonant complex as recited in Claim 1 wherein the quaternary amine for treating the smectite-containing clay comprises dimethyl benzyl hydrogenated tallow ammonium chloride.

5. An organoclay-antiozonant complex as recited in Claim 1 wherein the organoclay was produced by treating the smectite portion of a water-fractionated bentonite with a quaternary amine.

6. An organoclay-antiozonant complex as recited in Claim 5 wherein the quaternary amine for treating the smectite portion of the water-fractionated bentonite comprises dimethyl benzyl hydrogenated tallow ammonium chloride.

7. A method for preparing an organoclay-antiozonant complex functional as an additive to rubber for inhibiting ozone oxidation, comprising reacting a smectite-containing clay with a mixture consisting of a quaternary amine, a polar solvent, and an antiozonant consisting of dialkyl paraphenylenediamines, diaryl paraphenylenediamine, alkyl-aryl paraphenylenediamines, or mixtures thereof, to form an organoclay-antiozonant complex.

8. A method as recited in Claim 7 further comprising:

a. blending an unfractionated smectite-containing bentonite clay with water to form a high solids content paste; and

b. mixing said quaternary amine-antiozonant-solvent mixture with said high solids content paste of unfractionated smectite whereby said organoclay-antiozonant complex is formed.

9. A method as recited in Claim 8 wherein the quaternary amine comprises dimethyl benzyl hydrogenated tallow ammonium chloride.

10. A method recited in Claim 9 wherein the antiozonant comprises a six carbon alkyl-phenyl paraphenylenediamine.

11. A method as recited in Claim 7 further comprising:

a. preparing a low solids aqueous dispersion of smectite containing clay; and

b. mixing said low solids aqueous clay dispersion with a mixture consisting of a quaternary amine and an antiozonant consisting of dialkyl paraphenylenediamines, diaryl paraphenylenediamines, alkyl-aryl paraphenylenediamines, or mixtures thereof whereby said organoclay-antiozonant complex is formed.

12. A method as recited in Claim 11 further comprising:

a. fractionating said low solids aqueous clay dispersion into a predominantly smectite containing fraction and a predominantly non-smectite containing fraction;

b. removing and predominantly non-smectite containing fraction; and

c. mixing the predominantly smectite containing fraction with said quaternary amine and antiozonant mixture whereby said organoclay-antiozonant complex is formed.

13. A method as recited in Claim 12 wherein the quaternary amine comprises dimethyl benzyl hyrogenated tallow ammonium chloride.

14. A method as recited in Claim 13 wherein the antiozonant comprises a six carbon alkyl-phenyl paraphenylenediamine.

15. A method of incorporating an antiozonant into natural or synthetic rubber formualtions comprising:

a. forming an organoclay-antiozonant complex;

b. mixing said organoclay-antiozonant complex with a naphtenic oil and a polar solvent to form a paste; and

c. adding said organoclay-antiozonant-oil paste to the rubber formulation.

16. A method as recited in Claim 15 wherein the organoclay-antiozonant complex is prepared in accordance with the method of Claim 8.

17. A method as recited in Claim 15 wherein the organoclay-antiozonant complex is prepared in accordance with the method of Claim 11.

18. A method as recited in Claim 15 wherein the organoclay-antiozonant complex is prepared in accordance with the method of Claim 12.

19. A method as recited in Claim 15 wherein the organoclay-antiozonant complex comprises the organoclay-antiozonant complex of Claim 1.

20. An antiozonant paste suitable for adding directly to natural or synthetic rubber formulations for imparting thereto protection against ozone deterioration, comprising:

a. about 20 parts by weight of an organoclay-antiozonant complex produced by treating a smectite-containing clay with a quaternary amine and antiozonant mixture;

b. about 45 parts by weight of a naphtlenic oil; and

c. about 5 parts by weight of a polar solvent.

**Patentansprüche**

1. Organoton/Ozonschutzmittelkomplex, bestehend aus:

a. einem unter Diaryl-paraphenylendiaminen, Dialkyl-paraphenylendiaminen, Alkyl-aryl-paraphenylendiaminen oder deren Gemischen ausgewählten Ozonschutzmittel und

b. einem durch Behandlung eines smektithaltigen Tons mit einem quartären Amin hergestellten Organoton.

2. Organoton/Ozonschutzmittelkomplex nach Anspruch 1, worin das Ozonschutzmittel aus einem Alkyl-aryl-paraphenylendiamin besteht.

3. Organoton/Ozonschutzmittelkomplex nach Anspruch 1, worin das Ozonschutzmittel aus einem Alkyl-phenyl-paraphenylendiaminen mit 6 Kohlenstoffatomen im Alkylteil besteht.

4. Organoton/Ozonschutzmittelkomplex nach Anspruch 1, worin das quartäre Amin zur Behandlung des smektithaltigen Tons aus Dimethylbenzyl-hydrotalg-ammoniumchlorid besteht.

5. Organoton/Ozonschutzmittelkomplex nach Anspruch 1, worin der Organoton durch Behandlung des Smektitanteils eines wasserfraktionierten Bentonits mit einem quartären Amin hergestellt wurde.

6. Organoton/Ozonschutzmittelkomplex nach Anspruch 5, worin das quartäre Amin zur Behandlung des Smektitanteils des wasserfraktionierten Bentonits aus Dimethylbenzyl-hydrotalg-ammoniumchlorid besteht.

7. Verfahren zur Herstellung eines als Zusatzstoff für Kautschuk zur Hemmung oder Ozonoxydation funktionierenden Organoton/Ozonschutzmittelkomplexes, dadurch gekennzeichnet, dass man einem smektithaltigen Ton mit einem Gemisch aus einem quartären Amin, einem polaren Lösungsmittel und einem aus Dialkyl-paraphenylendiaminen, Diaryl-paraphenylendiaminen, Alkyl-aryl-paraphenylendiaminen oder deren Gemischen bestehenden Ozonschutzmittel zu einem Organoton/Ozonschutzmittelkomplex umsetzt.

8. Verfahren nach Anspruch 7, dadurch gekennzeichnet, dass man ferner:

a. zur Bildung eines Teigs mit hohem Feststoffgehalt einen unfraktionierten smektithaltigen Bentonitton mit Wasser vermengt und

b. jenes Gemisch aus quartärem Amin, Ozonschutzmittel und Lösungsmittel mit diesem Teig mit hohem Feststoffgehalt aus unfraktioniertem Smektit vermischt, wodurch sich besagter Organoton/Ozonschutzmittelkomplex bildet.

9. Verfahren nach Anspruch 8, worin das quartäre Amin aus Dimethylbenzyl-hydrotalg-ammoniumchlorid besteht.

10. Verfahren nach Anspruch 9, worin das Ozonschutzmittel aus einem Alkyl-phenyl-paraphenylendiamin mit 6 Kohlenstoffatomen im Alkylteil besteht.

11. Verfahren nach Anspruch 7, dadurch gekennzeichnet, dass man ferner:

a. eine wässrige Dispersion niedrigen Feststoffgehalts an smektithaltigem Ton herstellt und

b. diese wässrige Tondispersion niedrigen Feststoffgehalts mit einem Gemisch aus einem quartären Amin und einem aus Dialkyl-paraphenylendiaminen, Diaryl-paraphenylendiaminen, Alkyl-aryl-paraphenylendiaminen oder deren Gemsichen bestehenden Ozonschutzmittel vermischt, wodurch sich besagter Organoton/Ozonschutzmittelkomplex bildet.

12. Verfahren nach Anspruch 11, dadurch gekennzeichnet, dass man ferner:

a. besagte wässrige Tondispersion niedrigen Feststoffgehalts in eine vorwiegend smektithaltige Fraktion und eine vorwiegend keinen Smektit enthaltende Fraktion fraktioniert,

b. die vorwiegend keinen Smektit enthaltende Fraktion entfernt und

c. die vorwiegend smektithaltige Fraktion mit jenem Gemisch aus quartärem Amin und Ozonschutzmittel vermischt, wodurch sich besagter Organoton/Ozonschutzmittelkomplex bildet.

13. Verfahren nach Anspruch 12, worin das quatäre, Amin aus Dimethylbenzyl-hydrotalg-ammoniumchlorid besteht.

14. Verfahren nach Anspruch 13, worin das Ozonschutzmittel aus einem Alkyl-phenyl-paraphenylendiamin mit 6 Kohlenstoffatomen im Alkylteil besteht.

15. Verfahren zur Einführung eines Ozonschutzmittels in natürliche oder synthetische Kautschukrezepturen, dadurch gekennzeichnet, dass man:

a. einen Organoton/Ozonschutzmittelkomplex bildet,

b. diesen Organoton/Ozonschutzmittelkomplex mit einem Naphthenöl und einem polaren Lösungsmittel anteigt und

c. diesen Organoton/Ozonschutzmittel/Ölteig der Kautschkrezeptur zusetzt.

16. Verfahren nach Anspruch 15, worin der Organoton/Ozonschutzmittelkomplex gemäss dem Verfahren nach Anspruch 8 hergestellt wird.

17. Verfahren nach Anspruch 15, worin der Organoton/Ozonschutzmittelkomplex gemäss dem Verfahren nach Anspruch 11 hergestellt wird.

18. Verfahren nach Anspruch 15, worin der Organoton/Ozonschutzmittelkomplex gemäss dem Verfahren nach Anspruch 12 hergestellt wird.

19. Verfahren nach Anspruch 15, worin der Organoton/Ozonschutzmittelkomplex aus dem Organoton/Ozonschutzmittelkomplex nach Anspruch 1 besteht.

20. Ozonschutzmittelteig, geeignet für direkten Zusatz zu natürlichen oder synthetischen Kautschukrezepturen, um diesen Schutz gegen Ozonabbau zu verleihen, bestehend aus;

a. etwa 20 Gewichtsteilen eines durch Behandlung eines smektithaltigen Tons mit einem Gemisch aus quartärem Amin und Ozonschutzmittel hergestellten Organoton/Ozonschutzmittelkomplexes,

b. etwa 45 Gewichtsteilen eines Naphthenöls und

c. etwa 5 Gewichtsteilen eines polaren Lösungsmittels.

**Revendications**

1. Un complexe antiozonisant-organoargile comprenant:

a. un antiozonisant sélectionné parmi le groupe constitué des diaryl-paraphénylenediamines, des dialkyl-paraphénylenediamines, des alkyl-aryl-paraphénylènediamines, ou de mélanges de celles-ci; et

b. une organoargile qui a été produite par traitement d'une argile contenant de la smectite par une amine quaternaire.

2. Un complexe antiozonisant-organoargile selon la revendication 1 dans lequel l'antiozonisant comprend une alkyl-aryl-paraphénylenediamine.

3. Un complexe antiozonisant-organoargile selon la revendication 1 dans lequel l'antiozonisant comprend une alkyl-phényl-paraphénylènediamine à six carbones.

4. Un complexe antiozonisant-organoargile selon la revendication 1 dans lequel l'amine quaternaire pour traiter l'argile contenant de la smectite comprend du chlorure de diméthyl-benzylammonium de suif hydrogéné.

5. Un complexe antiozonisant-organoargile selon la revendication 1 dans lequel l'organoargile a été produite par traitement de la portion smectite d'une bentonite fractionnée à l'eau par une amine quaternaire.

6. Un complexe antiozonisant-organoargile selon la revendication 5 dans lequel l'amine quaternaire pour le traitement de la portion smectite de la bentonite fractionnée à l'eau comprend du chlorure de diméthyl-benzylammonium du suif hydrogéné.

7. Un procédé pour préparer un complexe antiozonisant-organoargile ayant le rôle d'additif au caoutchouc pour inhiber l'oxydation par l'ozone, comprenant la réaction d'une argile contenant de la smectite avec un mélange constitué d'une amine quaternaire, d'un solvant polaire et d'un antiozonisant constitué de dialkyl-paraphénylènediamines, de diaryl-paraphénylènediamines, d'alkyl-aryl-paraphénylènediamines, ou de mélanges de celles-ci, pour former un complexe antiozonisant-organoargile.

8. Un procédé selon la revendication 7 comprenant en outre les étapes suivantes:

a. mélanger une argile bentonite contenant de la smectite non-fractionnée avec de l'eau pour former une pâte à teneur en solides élevée; et

b. mélanger ledit mélange amine quaternaire-antiozonisant-solvant avec ladite pâte à teneur en solides élevée de smectite non-fractionnée, ce par quoi ledit complexe antiozonisant-organoargile est formé.

9. Un procédé selon la revendication 8 dans lequel l'amine quaternaire comprend du chlorure de diméthyl-benzylammonium de suif hydrogéné.

10. Un procédé selon la revendication 9 das lequel l'antiozonisant comprend une alkyl-phényl-paraphénylènediamine à six carbones.

11. Un procédé selon la revendication 7 comprenant en outre les étapes suivantes:

a. préparer une dispersion aqueuse d'argile contenant de la smectite, à teneur en solides basse, et

b. mélanger ladite dispersion d'argile aqueuse à teneur en solides basse avec un mélange constitué d'une amine quaternaire et d'un antiozonisant constitué de dialkyl-paraphénylènediamines, de diaryl-paraphénylènediamines, d'alkyl-aryl-paraphénylènediamines, ou de mélanges de celles-ci, ce par quoi ledit complexe antiozonisant-organoargile est formé.

12. Un procédé selon la revendication 11 comprenant en outre les étapes suivantes:

a. fractionner ladite dispersion d'argile aqueuse à teneur en solides basse en une fraction composée principalement de smectite et en une fraction composé principalement de non-smectite;

b. éliminer la fraction composée principalement de non-smectite; et

c. mélanger la fraction composée principalement de smectite avec ladite amine quaternaire et ledit mélange antiozonisant, ce par quoi ledit complexe antiozonisant-organoargile est formé.

13. Un procédé selon la revendication 12 dans lequel l'amine quaternaire comprend du chlorure de diméthyl-benzylammonium de suif hydrogéné.

14. Un procédé selon la revendication 13 dans lequel l'antiozonisant comprend une alkyl-phényl-paraphénylènediamine à six carbones.

15. Un procédé pour incorporer un antiozonisant dans des formulations de caoutchoucs naturel ou synthétique comprenant les étapes suivantes:

a. former un complexe antiozonisant-organoargile;

b. mélanger ledit complexe antiozonisant-organoargile avec une huile naphténique et un solvant polaire pour former une pâte; et

c. ajouter ladite pâte de d'huile-antiozonisant-organoargile à la formulation de caoutchouc.

16. Un procédé selon la revendication 15 dans lequel le complexe antiozonisant-organoargile est préparé selon le procédé de la revendication 8.

17. Un procédé selon la revendication 15 dans lequel le complexe antiozonisant-organoargile est préparé selon le procédé de la revendication 11.

18. Un procédé selon la revendication 15 dans lequel le complexe antiozonisant-organoargile est préparé selon le procédé de la revendication 12.

19. Un procédé selon la revendication 15 dans lequel le complexe antiozonisant-organoargile comprend le complexe antiozonisant-organoargile de la revendication 1.

20. Une pâte antiozonisante qui convient à l'addition directe à des formulations de caoutchoucs naturel ou synthétique pour leur impartir une protection contre la détérioration par l'ozone comprenant;

a. environ 20 parties en poids d'un complexe antiozonisant-organoargile produit par traitement d'une argile contenant de la smectite par une amine quaternaire et un mélange antiozonisant;

b. environ 45 parties en poids d'une huile naphténique; et

c. environ 5 parties en poids d'un solvant polaire.